# EUROPÄISCHE PATENTANMELDUNG

(11) **EP 2 457 760 A2**
(43) Veröffentlichungstag der Anmeldung: **30.05.2012**
(21) Anmeldenummer: 11185394.1
(22) Anmeldetag: 17.10.2011
(51) Int. Cl.: B60K 6/387

(54) **Antriebsstrang und Verfahren zum Betreiben desselben**

(30) Priorität: 24.11.2010 DE 102010061827
(71) Anmelder: ZF Friedrichshafen AG, 88038 Friedrichshafen (DE)
(72) Erfinder: Kaltenbach, Johannes, 88048 Friedrichshafen (DE)

(57) **Zusammenfassung**

Antriebsstrang eines Hybridfahrzeugs, mit einem einen Verbrennungsmotor (1) und eine elektrische Maschine (2) umfassenden Antriebsaggregat (3) und mit einem zwischen das Antriebsaggregat (3) und einen Abtrieb (4) geschalteten Doppelkupplungsgetriebe (5), wobei Teilgetriebe (6, 7) des Doppelkupplungsgetriebes (5) jeweils über jeweils eine Lastschaltkupplung (9, 10) einer Doppelkupplung (8) an den Verbrennungsmotor (1) ankoppelbar sind, und wobei die elektrische Maschine (2) einem Teilgetriebe (7) des Doppelkupplungsgetriebes (5) derart zugeordnet ist, dass dieselbe zwischen diesem Teilgetriebe (7) und der demselben zugeordneten Lastschaltkupplung (10) der Doppelkupplung (8) an eine Getriebewelle (12) dieses Teilgetriebes (7) angekoppelt oder ankoppelbar ist, wobei zwischen den Verbrennungsmotor (1) und die beiden parallel geschalteten Lastschaltkupplungen (9, 10) der Doppelkupplung (8) eine Trennkupplung (14) geschaltet ist, die jeweils in Reihe zu den beiden parallel geschalteten Lastschaltkupplungen (9, 10) der parallel geschalteten Teilgetriebe (6, 7) geschaltet ist.

## Beschreibung

Die Erfindung betrifft ein einen Antriebsstrang eines Hybridfahrzeugs nach dem Oberbegriff des Anspruchs 1. Des Weiteren betrifft die Erfindung Verfahren zum Betreiben eines solchen Antriebsstrangs eines Hybridfahrzeugs.

Aus der DE 198 50 549 A1 ist ein Antriebsstrang eines Hybridfahrzeugs bekannt. Nach diesem Stand der Technik umfasst der Antriebsstrang ein Antriebsaggregat, das von einem Verbrennungsmotor und einer elektrischen Maschine gebildet wird. Zusätzlich umfasst der Antriebsstrang nach diesem Stand der Technik ein zwischen das Antriebsaggregat und einen Abtrieb geschaltetes Doppelkupplungsgetriebe mit zwei Teilgetrieben. Ein erstes Teilgetriebe des Doppelkupplungsgetriebes ist über eine erste Lastschaltkupplung einer Doppelkupplung an den Verbrennungsmotor ankoppelbar. Ein parallel zum ersten Teilgetriebe geschaltetes zweites Teilgetriebe des Doppelkupplungsgetriebes ist über eine zweite Lastschaltkupplung der Doppelkupplung, die parallel zur ersten Lastschaltkupplung geschaltet ist, an den Verbrennungsmotor ankoppelbar. Nach der DE 198 50 549 A1 ist an wenigstens eine Eingangswelle wenigstens eines Teilgetriebes des Doppelkupplungsgetriebes eine elektrische Maschine ankoppelbar.

Dann, wenn, wie nach der DE 198 50 549 A1 vorgeschlagen, eine elektrische Maschine an eine Welle eines Teilgetriebes des Doppelkupplungsgetriebes ankoppelbar ist, wirkt die elektrische Maschine direkt auf das jeweilige Teilgetriebe des Doppelkupplungsgetriebes. Es können dann Verluste der elektrischen Maschine in Bezug auf das jeweilige Teilgetriebe des Doppelkupplungsgetriebes vermieden werden. Bei einem solchen Antriebsstrang sind jedoch keine Lastschaltungen, also keine Zugschaltungen und keine Schubschaltungen, bei rein elektrischer Fahrt möglich.

Ein weiterer Nachteil eines solchen Antriebsstrangs besteht darin, dass zwar grundsätzlich ein Start des Verbrennungsmotors aus rein elektrischer Fahrt heraus möglich ist, jedoch nur ohne sogenannte Schlupfentkopplung zum Abtrieb und ohne Nutzung der Schwungmasse der elektrischen Maschine.

Hiervon ausgehend liegt der vorliegenden Erfindung die Aufgabe zu Grunde, einen neuartigen Antriebsstrangs eines Hybridfahrzeugs sowie Verfahren zum Betreiben desselben zu schaffen. Diese Aufgabe wird durch einen Antriebsstrangs gemäß Anspruch 1 gelöst. Erfindungsgemäß ist zwischen den Verbrennungsmotor und die beiden parallel geschalteten Lastschaltkupplungen der Doppelkupplung eine Trennkupplung geschaltet, die jeweils in Reihe zu den beiden parallel geschalteten Lastschaltkupplungen der parallel geschalteten Teilgetriebe geschaltet ist.

Erfindungsgemäß wird vorgeschlagen, zwischen der Doppelkupplung des Doppelkupplungsgetriebes und dem Verbrennungsmotor eine zusätzliche Trennkupplung vorzusehen, die in Reihe zum Verbrennungsmotor und der Doppelkupplung zwischen den Verbrennungsmotor und die beiden parallel geschalteten Lastschaltkupplungen der Doppelkupplung geschaltet ist.

Ein solcher Antriebsstrang verfügt über den Vorteil, dass Lastschaltungen aus einer rein elektrischen Fahrt heraus möglich sind.

Ferner ist ein Zustart des Verbrennungsmotors aus rein elektrischer Fahrt heraus mit Schlupfentkopplung zum Antrieb und unter Nutzung der Schwungmasse der elektrischen Maschine möglich.

Des Weiteren kann die elektrische Maschine direkt auf ein Teilgetriebe des Doppelkupplungsgetriebes verlustfrei einwirken.

Ein erstes erfindungsgemäßes Verfahren zum Betreiben eines solchen Antriebsstrangs ist in Anspruch 6 definiert. Hiernach wird bei rein elektrischer Fahrt über ein erstes Teilgetriebe, dem die elektrische Maschine zugeordnet ist, bei geöffneten Lastschaltkupplungen und geöffneter Trennkupplung eine Zughochschaltung oder eine Schubrückschaltung derart ausgeführt wird, dass zur Schaltungsvorbereitung eine der beiden parallel geschalteten Lastschaltkupplungen der Doppelkupplung zur Schaltungsausführung ausgewählt, in dem anderen, zweiten Teilgetriebe, dem die elektrische Maschine nicht zugeordnet ist, ein Zielgang der auszuführenden Schaltung eingelegt und die nicht zur Schaltungsausführung ausgewählte Lastschaltkupplung geschlossen wird, wobei nachfolgend zur Schaltungsausführung die ausgewählte Lastschaltkupplung soweit geschlossen wird, dass das erste Teilgetriebe lastfrei wird, wobei bei lastfreiem ersten Teilgetriebe der Istgang der auszuführenden Zughochschaltung oder Schubrückschaltung im ersten Teilgetriebe ausgelegt, nachfolgend die elektrische Maschine und die ausgewählte Lastschaltkupplung synchronisiert und darauffolgend diese Lastschaltkupplung geschlossen wird.

Ein zweites erfindungsgemäßes Verfahren zum Betreiben eines solchen Antriebsstrangs ist in Anspruch 9 definiert. Hiernach wird bei rein elektrischer Fahrt über ein erstes Teilgetriebe, dem die elektrische Maschine nicht zugeordnet ist, bei geschlossenen Lastschaltkupplungen der Doppelkupplung und geöffneter Trennkupplung eine Schubhochschaltung oder eine Zugrückschaltung derart ausgeführt wird, dass zur Schaltungsvorbereitung eine der beiden parallel geschalteten Lastschaltkupplungen der Doppelkupplung zur Schaltungsausführung ausgewählt und für das andere, zweite Teilgetriebe, dem die elektrische Maschine zugeordnet ist, ein Zielgang der auszuführenden Schubhochschaltung oder Zugrückschaltung ausgewählt wird, wobei nachfolgend zur Schaltungsausführung die ausgewählte Lastschaltkupplung soweit geöffnet wird, dass an derselben ein Schlupf auftritt, wobei bei schlupfender Lastschaltkupplung der Zielgang der auszuführenden Schubhochschaltung oder Zugrückschaltung im zweiten Teilgetriebe eingelegt, nachfolgend die ausgewählte Lastschaltkupplung weiter geöffnet und darauffolgend der Istgang der auszuführenden Schubhochschaltung oder Zugrückschaltung im ersten Teilgetriebe ausgelegt wird.

Ein drittes erfindungsgemäßes Verfahren zum Betreiben eines solchen Antriebsstrangs ist in Anspruch 12 definiert. Hiernach wird bei rein elektrischer Fahrt über ein erstes Teilgetriebe, dem die elektrische Maschine zugeordnet ist, bei geöffneten Lastschaltkupplungen und geöffneter Trennkupplung, nämlich bei Ausführung einer Schaltung, der Verbrennungsmotor über die elektrische Maschine derart zugestartet wird, dass die dem anderen, zweiten Teilgetriebe zugeordnete Lastschaltkupplung der Doppelkupplung zur Schaltungsausführung ausgewählt, in dem anderen, zweiten Teilgetriebe, dem die elektrische Maschine nicht zugeordnet ist, ein Zielgang der auszuführenden Schaltung eingelegt und die nicht zur Schaltungsausführung ausgewählte Lastschaltkupplung geschlossen wird, wobei nachfolgend die zur Schaltungsausführung ausgewählte Lastschaltkupplung soweit geschlossen wird, dass das erste Teilgetriebe lastfrei wird, wobei bei lastfreiem ersten Teilgetriebe der Istgang der auszuführenden Schaltung im ersten Teilgetriebe ausgelegt und nachfolgend der Verbrennungsmotor über die elektrische Maschine durch zumindest teilweises Schließen der Trennkupplung angeschleppt wird.

Nach einer vorteilhaften Weiterbildung des Antriebsstrangs ist die elektrische Maschine mittelbar über ein zwischengeschaltetes Schaltelement an der Getriebewelle desjenigen Teilgetriebes, dem die elektrische Maschine zugeordnet ist, ankoppelbar, nämlich derart, dass in einer ersten Schaltstellung des Schaltelements die elektrische Maschine an der Getriebewelle des Teilgetriebes angreift, dass in einer zweiten Schaltstellung des Schaltelements die elektrische Maschine an einer Welle zwischen der Trennkupplung und den beiden parallel geschalteten Lastschaltkupplungen angreift, und dass in einer dritten Schaltstellung des Schaltelements die elektrische Maschine vollständig abgekoppelt ist.

Ein Antriebsstrang nach dieser Weiterbildung ist grundsätzlich wie oben beschrieben betreibbar. Vorzugsweise wird ein Antriebsstrang nach dieser Weiterbildung jedoch nach dem Verfahren gemäß in Anspruch 15 betrieben. Hiernach wird die erste Schaltstellung des Schaltelements dann gewählt, wenn bei geschlossener Trennkupplung hybridisch gefahren wird, wobei die zweite Schaltstellung des Schaltelements dann gewählt wird, wenn rein elektrisch gefahren wird und/oder wenn aus rein elektrischer Fahrt heraus der Verbrennungsmotor gestartet wird, und wobei die dritte Schaltstellung des Schaltelements dann gewählt wird, wenn rein verbrennungsmotorisch gefahren wird.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein Schema eines erfindungsgemäßen Antriebsstrangs eines Hybridfahrzeugs nach einem ersten Ausführungsbeispiel der Erfindung;
- Fig. 2: ein Schema eines erfindungsgemäßen Antriebsstrangs eines Hybridfahrzeugs nach einem zweiten Ausführungsbeispiel der Erfindung; und
- Fig. 3: ein Schema eines erfindungsgemäßen Antriebsstrangs eines Hybridfahrzeugs nach einem dritten Ausführungsbeispiel der Erfindung.

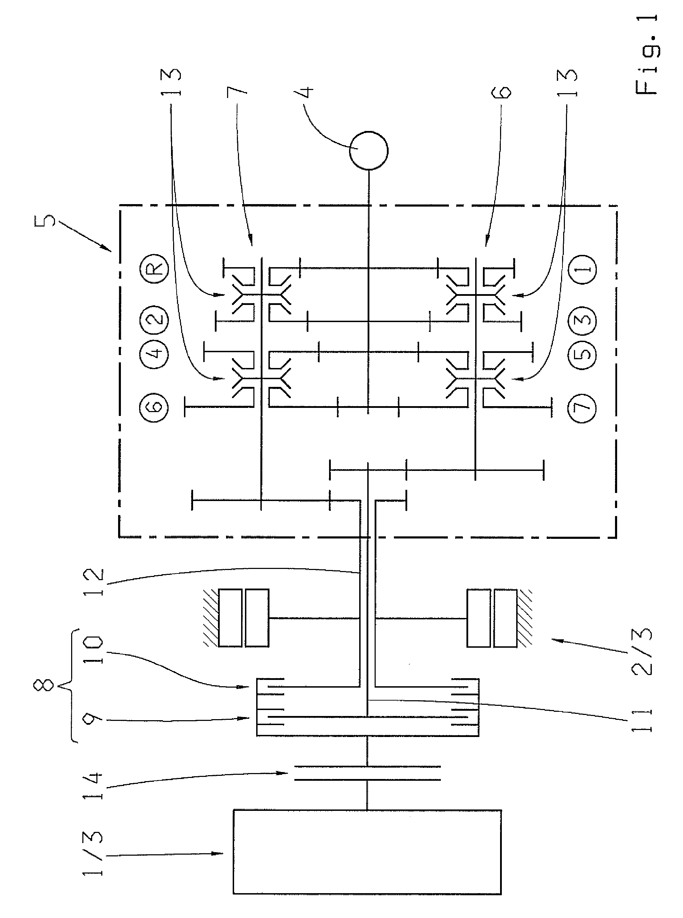

Die hier vorliegende Erfindung betrifft einen Antriebsstrang eines Hybridfahrzeugs und Verfahren zum Betreiben desselben. Die Erfindung wird nachfolgend unter Bezugnahme auf die Ausführungsbeispiele der Fig. 1 bis 3 im Detail beschrieben.

Fig. 1 zeigt ein erstes Ausführungsbeispiel eines erfindungsgemäßen Antriebsstrangs eines Hybridfahrzeugs, wobei der Antriebsstrang der Fig. 1 ein von einem Verbrennungsmotor 1 und einer elektrischen Maschine 2 gebildetes Antriebsaggregat 3 umfasst. Zwischen das Antriebsaggregat 3 und einen Abtrieb 4 ist ein als Doppelkupplungsgetriebe 5 ausgebildetes Getriebe mit zwei Teilgetrieben 6 und 7 geschaltet, wobei das Doppelkupplungsgetriebe 5 weiterhin eine Doppelkupplung 8 umfasst, die über zwei parallel zueinander geschaltete Lastschaltkupplungen 9 und 10 verfügt.

Über die Lastschaltkupplung 9 der Doppelkupplung 8 ist das Teilgetriebe 6 an den Verbrennungsmotor 1 des Antriebsaggregats 3 ankoppelbar. Über die parallel zur Lastschaltkupplung 9 geschaltete Lastschaltkupplung 10 der Doppelkupplung 8 ist das parallel zum Teilgetriebe 6 geschaltete Teilgetriebe 7 des Doppelkupplungsgetriebes 5 an den Verbrennungsmotor 1 des Antriebsaggregats 3 ankoppelbar.

So kann Fig. 1 entnommen werden, dass die Lastschaltkupplung 9 der Doppelkupplung 8 über eine Welle 11 mit dem Teilgetriebe 6 des Doppelkupplungsgetriebes 5 in Verbindung steht. Die Lastschaltkupplung 10 steht hingegen über eine Welle 12 mit dem Teilgetriebe 7 des Doppelkupplungsgetriebes 5 in Verbindung. Dabei ist gemäß Fig. 1 die Welle 12 als Hohlwelle ausgeführt, innerhalb derer die Welle 11 verläuft.

Im gezeigten Ausführungsbeispiel stellt das Teilgetriebe 6 des Doppelkupplungsgetriebes 5 die Vorwärtsgänge "1", "3", "5" und "7" bereit. Das Teilgetriebe 7 des Doppelkupplungsgetriebes 5 stellt hingegen die Vorwärtsgänge "2", "4" und "6" sowie den Rückwärtsgang "R" bereit. Die Gänge werden durch entsprechende Ansteuerung von als Klauen ausgebildeten Schaltelementen 13 des Doppelkupplungsgetriebes 5 geschaltet.

Es sei an dieser Stelle darauf hingewiesen, dass die Aufteilung der Vorwärtsgänge sowie des Rückwärtsgangs auf die Teilgetriebe 6 und 7 des Doppelkupplungsgetriebes 5 sowie die in Fig. 1 gezeigten Radsätze und Schaltelemente 13 lediglich rein exemplarischer Natur sind.

Wie bereits ausgeführt, umfasst das Antriebsaggregat 3 des in Fig. 1 gezeigten Antriebsstrangs neben dem Verbrennungsmotor 1 die elektrische Maschine 2, wobei die elektrische Maschine 2 einem Teilgetriebe des Doppelkupplungsgetriebes 5 zugeordnet ist, nämlich derart, dass die elektrische Maschine 2 des Antriebsaggregats 3 zwischen diesem Teilgetriebe und der demselben zugeordneten Lastschaltkupplung der Doppelkupplung 8 an eine Getriebewelle dieses Teilgetriebes ankoppelbar ist.

Im gezeigten Ausführungsbeispiel ist die elektrische Maschine 2 dem Teilgetriebe 7 des Doppelkupplungsgetriebes 5 zugeordnet, nämlich derart, dass die elektrische Maschine 2 zwischen dem Teilgetriebe 7 und der mit dem Teilgetriebe 7 zusammen wirkenden Lastschaltkupplung 10 der Doppelkupplung 8 an die Welle 12, die zwischen der Lastschaltkupplung 10 der Doppelkupplung 8 und dem Teilgetriebe 7 des Doppelkupplungsgetriebes 5 verläuft, angekoppelt ist. Es sei an dieser Stelle darauf hingewiesen, dass die elektrische Maschine 2 in Fig. 1 auch dem Teilgetriebe 6 zugeordnet sein kann und dann an der Welle 11, die zwischen dem Teilgetriebe 6 und der mit demselben zusammenwirkenden Lastschaltkupplung 9 der Doppelkupplung 8 verläuft, angreift.

Erfindungsgemäß ist zwischen den Verbrennungsmotor 1 des Antriebsaggregats 3 und die beiden parallel geschalteten Lastschaltkupplungen 9 und 10 der Doppelkupplung 8 eine Trennkupplung 14 geschaltet, die in Reihe zur Doppelkupplung 8 und dem Verbrennungsmotor 1 und damit in Reihe zum Verbrennungsmotor 1 und den beiden parallel geschalteten Lastschaltkupplungen 9 und 10 der Doppelkupplung 8 geschaltet ist.

Durch das Vorsehen einer solchen Trennkupplung 14 zwischen der Doppelkupplung 8 und dem Verbrennungsmotor 1 kann unter Beibehaltung des Vorteils, dass die elektrische Maschine 2 unmittelbar und demnach verlustfrei auf ein Teilgetriebe, nämlich in Fig. 1 auf das Teilgetriebe 7, des Doppelkupplungsgetriebes 5 einwirken kann, die Ausführungen von Lastschaltungen bei rein elektrischer Fahrt des Antriebsstrangs gewährleistet werden.

Weiterhin kann ein Verbrennungsmotorstart bei rein elektrischer Fahrt mit Schlupfentkopplung zum Abtrieb 4 und mit Ausnutzung der Schwungmasse der elektrischen Maschine 2 erfolgen.

Als erstes erfindungsgemäßes Verfahren zum Betreiben des Antriebsstrangs der Fig. 1 wird nachfolgend die Ausführung einer Zughochschaltung oder Schubrückschaltung beschrieben, wobei vor Ausführung einer Zughochschaltung oder einer Schubrückschaltung der Antriebsstrang der Fig. 1 rein elektrisch über das Teilgetriebe 7, dem die elektrische Maschine 2 zugeordnet ist, bei geöffneten Lastschaltkupplungen 9 und 10 der Doppelkupplung 8 und bei geöffneter Trennkupplung 14 fährt.

Dann, wenn dieser Ausgangszustand des Antriebsstrangs der Fig. 1 der Fig. 1 vorliegt, können als Lastschaltungen ausschließlich Zughochschaltungen oder Schubrückschaltungen jedoch keine Schubhochschaltungen oder keine Zugrückschaltungen ausgeführt werden.

Dann, wenn die Lastschaltkupplungen 9 und 10 der Doppelkupplung 8 sowie die Trennkupplung 14 geöffnet sind, drehen bei elektrischer Fahrt über das Teilgetriebe 7 möglichst wenig der elektrischen Fahrt nicht beteiligte Teile des Doppelkupplungsgetriebes 5 mit.

Zur Ausführung einer Zughochschaltung oder einer Schubrückschaltung wird, ausgehend von diesem Ausgangszustand des Antriebsstrangs der Fig. 1, die auszuführende Zughochschaltung oder die auszuführende Schubrückschaltung zunächst derart vorbereitet, dass zur Schaltungsvorbereitung eine der beiden parallel geschalteten Lastschaltkupplungen 9 und 10 der Doppelkupplung 8 zur nachfolgenden Schaltungsausführung ausgewählt, in dem Teilgetriebe 6, dem die elektrische Maschine nicht zugeordnet ist, ein Zielgang der auszuführenden Zughochschaltung oder der auszuführenden Schubrückschaltung eingelegt und die nicht zur Schaltungsausführung ausgewählte Lastschaltkupplung der Doppelkupplung 8 geschlossen wird.

Vorzugsweise wird diejenige Lastschaltkupplung 9 bzw. 10 der Doppelkupplung 8 zur Schaltungsausführung ausgewählt, welche die anfallende Reibleistung der auszuführenden Schaltung besser ausnehmen kann. So ist es möglich, die entsprechende Lastschaltkupplung 9 bzw. 10 der Doppelkupplung 8 anhand der zurückliegenden Beanspruchung der Lastschaltkupplungen 9 und 10 auszuwählen.

Nachfolgend wird exemplarisch davon ausgegangen, dass die Lastschaltkupplung 9, die mit dem Teilgetriebe 6 zusammen wirkt, zur Schaltungsausführung ausgewählt wird. Es kann jedoch auch die Lastschaltkupplung 10 ausgewählt werden.

Zur eigentlichen Ausführung der auszuführenden Zughochschaltung bzw. Schubrückschaltung wird die zur Schaltungsausführung ausgewählte Lastschaltkupplung, also exemplarisch die Lastschaltkupplung 9, soweit geschlossen, dass das Teilgetriebe 7, in welchem der Istgang der auszuführenden Schaltung eingelegt ist, lastfrei wird. Dies kann zum Beispiel durch eine rampenartige Erhöhung der Übertragungsfähigkeit der Lastschaltkupplung 9 bis auf das von der elektrischen Maschine 2 bereitgestellte Moment erfolgen.

Sobald das Teilgetriebe 7, in welchem der Istgang der auszuführenden Zughochschaltung oder Schubrückschaltung noch eingelegt ist, lastfrei ist, wird der Istgang der auszuführenden Zughochschaltung oder der auszuführenden Schubrückschaltung im Teilgetriebe 7 ausgelegt, wobei nachfolgend die elektrische Maschine 2 mit der zur Schaltungsausführung ausgewählten Lastschaltkupplung, also der Lastschaltkupplung 9, synchronisiert wird. Diese Synchronisierung erfolgt durch eine Drehzahlanpassung der elektrischen Maschine 2. Darauffolgend wird die Lastschaltkupplung 9 vollständig geschlossen.

Ein weiteres erfindungsgemäßes Verfahren zum Betreiben des erfindungsgemäßen Antriebsstrangs der Fig. 1 betrifft die Ausführung einer Zugrückschaltung oder Schubhochschaltung bei rein elektrischem Betrieb des Antriebsstrangs. In diesem Fall soll davon ausgegangen werden, dass der Antriebsstrang in einem Ausgangszustand betrieben wird, in dem der Antriebsstrang rein elektrisch über das Teilgetriebe fährt, dem elektrische Maschine 2 nicht zugeordnet ist, also in Fig. 1 über das Teilgetriebe 6. In diesem Fall sind dann bei rein elektrischer Fahrt die Lastschaltkupplungen 9 und 10 der Doppelkupplung 8 beide geschlossen, wohingegen die Trennkupplung 14 bei rein elektrischer Fahrt geöffnet ist. In diesem Fall können als Lastschaltungen ausschließlich Schubhochschaltungen oder Zugrückschaltungen jedoch keine Zughochschaltungen oder keine Schubrückschaltungen ausgeführt werden.

Zur nachfolgenden Ausführung einer Zugrückschaltung oder Schubhochschaltung ausgehend von diesem Ausgangszustand bei rein elektrischer Fahrt über das Teilgetriebe 6, dem die elektrische Maschine 2 nicht zugeordnet ist, wird die auszuführende Schaltung zunächst durch Auswahl einer der Lastschaltkupplungen 9 und 10 der Doppelkupplung 8 zur nachfolgenden Schaltungsausführung und durch Auswahl eines Zielgangs der auszuführenden Zugrückschaltung bzw. der auszuführenden Schubhochschaltung für das andere Teilgetriebe 7 vorbereitet.

Nachfolgend soll exemplarisch davon ausgegangen werden soll, dass die mit dem Teilgetriebe 7 zusammen wirkende Lastschaltkupplung 10 der Doppelkupplung zur nachfolgenden Schaltungsausführung ausgewählt wird.

Die Auswahl der Lastschaltkupplung für die auszuführende Schaltung erfolgt wiederum derart, dass diejenige Lastschaltkupplung 9 bzw. 10 der Doppelkupplung 8 ausgewählt wird, welche die bei Ausführung der Schaltung auftretende Reibleistung besser aufnehmen kann. Hierzu kann auf die vergangene Beanspruchung der Lastschaltkupplungen 9 und 10 der Doppelkupplung 8 zugegriffen werden.

Wie bereits ausgeführt, wird zur Vorbereitung der auszuführenden Schubhochschaltung oder der auszuführenden Zugrückschaltung nicht nur eine der Lastschaltkupplungen 9 und 10 der Doppelkupplung 8 ausgewählt, vielmehr wird auch ein Zielgang der auszuführenden Schubhochschaltung bzw. der auszuführenden Zugrückschaltung für das Teilgetriebe 7 ausgewählt.

Zur eigentlichen Ausführung der Zugrückschaltung bzw. Schubhochschaltung wird nachfolgend die zur Schaltungsausführung ausgewählte Lastschaltkupplung, also exemplarisch die Lastschaltkupplung 10, der Doppelkupplung 8 soweit geöffnet, bis an derselben ein Schlupf auftritt. Dann, wenn an der schlupfenden Lastschaltkupplung 10 eine Synchronisierung bezüglich des einzulegenden Zielgangs der auszuführenden Zugrückschaltung bzw. Schubhochschaltung erkannt wird, wird der Zielgang der auszuführenden Schaltung im Teilgetriebe 7 eingelegt, wobei anschließend die zur Schaltungsausführung ausgewählte Lastschaltkupplung der Doppelkupplung 8, also die Lastschaltkupplung 10, weiter geöffnet wird, und zwar vorzugsweise derart, bis deren Übertragungsfähigkeit auf Null reduziert wurde. Darauffolgend kann dann der Istgang der auszuführenden Zugrückschaltung bzw. Schubhochschaltung im Teilgetriebe 6 ausgelegt und die Lastschaltkupplung 9 geöffnet werden.

Ein weiteres erfindungsgemäßes Verfahren zum Betreiben des Antriebsstrangs der Fig. 1 sieht vor, dass aus einer rein elektrischen Fahrt des Antriebsstrangs heraus der Verbrennungsmotor 1 des Antriebsaggregats 3 zugestartet bzw. angeschleppt wird. Im Nachfolgenden wird davon ausgegangen, dass dies innerhalb der Ausführung einer Zughochschaltung erfolgt. Der Verbrennungsmotor kann jedoch auch bei Ausführung einer Schubrückschaltung aus rein elektrischer Fahrt heraus angeschleppt werden.

Als Ausgangszustand des Antriebsstrangs der Fig. 1 für das Starten des Verbrennungsmotors 1 aus rein elektrischer Fahrt des Antriebsstrangs heraus soll davon ausgegangen werden, dass der Antriebsstrang über das Teilgetriebe 7, dem die elektrische Maschine 2 zugeordnet ist, rein elektrisch fährt, wobei dann beide Lastschaltkupplungen 9 und 10 der Doppelkupplung 8 sowie die Trennkupplung 14 geöffnet sind und das Teilgetriebe 6 vorzugsweise eine Neutralstellung einnimmt.

Zunächst wird eine Lastschaltung, nämlich eine Zughochschaltung, vorbereitet, indem die dem Teilgetriebe 6 zugeordnete Lastschaltkupplung 9 der Doppelkupplung 8 zur Schaltungsausführung ausgewählt, im Teilgetriebe 6 ein Zielgang der auszuführenden Zughochschaltung eingelegt und die nicht zur Schaltungsausführung ausgewählte Lastschaltkupplung 10 der Doppelkupplung 8 geschlossen wird.

Zur eigentlichen Schaltungsausführung der Zughochschaltung wird die zur Schaltungsausführung ausgewählte Lastschaltkupplung 9 der Doppelkupplung 8 teilweise geschlossen, sodass das Teilgetriebe 7 lastfrei wird, wobei dann im Teilgetriebe 7 der Istgang der auszuführenden Zughochschaltung ausgelegt wird. Bei lastfreiem Teilgetriebe 7 wird dann der Verbrennungsmotor 1 gestartet bzw. angeschleppt, nämlich dadurch, dass die Trennkupplung 14 zumindest teilweise geschlossen wird, wodurch die Übertragungsfähigkeit der Trennkupplung 14 erhöht wird.

Beim Schließen der Trennkupplung 14 wird vorzugsweise gleichzeitig eine Drehzahlanpassung der elektrischen Maschine 2 durchgeführt, bis die zur Schaltungsausführung ausgewählte Lastschaltkupplung 9 der Doppelkupplung 8 synchron ist. Hierdurch kann die Schwungmasse der elektrischen Maschine 2 als Startmoment beim Anschleppen des Verbrennungsmotors 1 genutzt werden. Nachdem der Verbrennungsmotor 1 soweit angeschleppt ist, dass derselbe aus eigener Kraft hochlaufen und demnach seine Drehzahl selbst erhöhen kann, wird vorzugsweise die Übertragungsfähigkeit der Trennkupplung 14 durch Öffnen derselben wieder reduziert. Anschließend wird die zur Schaltungsausführung ausgewählte Lastschaltkupplung 9 der Doppelkupplung 8 geschlossen.

Über die Lastschaltkupplung 9 kann beim Starten des Verbrennungsmotors 1 aus rein elektrischer Fahrt des Antriebsstrangs heraus bei bzw. während der Ausführung einer Zughochschaltung eine Schlupfentkopplung zum Abtrieb hin realisiert werden.

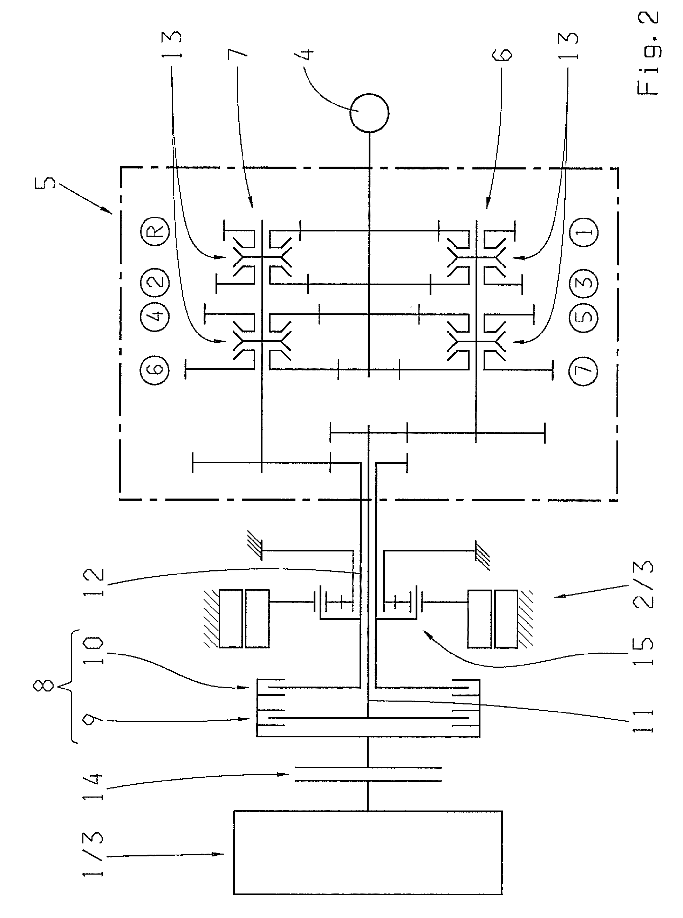

Eine Weiterbildung des Antriebsstrangs der Fig. 1 zeigt Fig. 2, wobei sich der Antriebsstrang der Fig. 2 vom Antriebsstrang der Fig. 1 lediglich dadurch unterscheidet, dass die elektrische Maschine 2 des Antriebsaggregats 3 nicht unmittelbar an der Welle 12 angreift, sondern vielmehr mittelbar über eine zwischen die Welle 12 und die elektrische Maschine 2 geschaltete Konstantübersetzungsstufe 15. Dabei ist gemäß Fig. 2 die Konstantübersetzungsstufe 15 über ein Planetengetriebe bereitgestellt.

Der Antriebsstrang der Fig. 2 kann, wie oben für den Antriebsstrang der Fig. 1 beschrieben, betrieben werden, sodass zur Vermeidung unnötiger Wiederholungen für den Antriebsstrang der Fig. 2 auf die Ausführungen zum Antriebsstrang der Fig. 1 verwiesen wird.

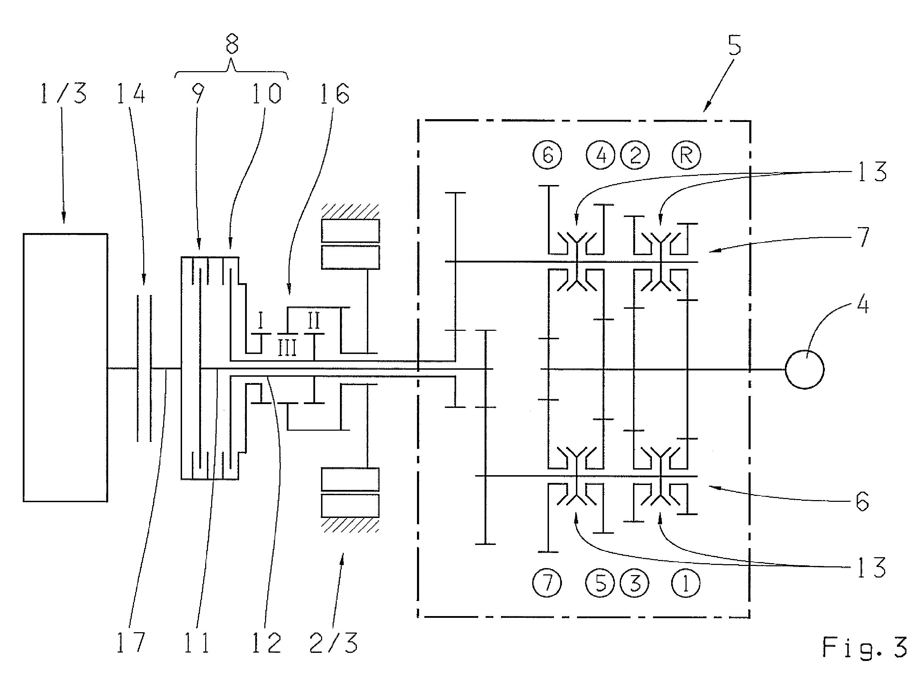

Ein weiteres Ausführungsbeispiel eines erfindungsgemäßen Antriebsstrangs zeigt Fig. 3, wobei im Ausführungsbeispiel der Fig. 3 die elektrische Maschine 2 des Antriebsaggregats 3 über ein Schaltelement 16 mittelbar an die Getriebewelle 12 des Teilgetriebes 7 ankoppelbar ist.

Gemäß Fig. 3 weist das Schaltelement 16 drei Schaltstellungen I, II und III auf, wobei in der ersten Schaltstellung I die elektrische Maschine 2 des Antriebsaggregats 3 an einer Welle 17 angreift, die zwischen der Doppelkupplung 8 und der Trennkupplung 14 verläuft. In der Schaltstellung II ist die elektrische Maschine 2 wie im Ausführungsbeispiel der Fig. 1 an die Welle 12 des Teilgetriebes 7 angekoppelt. In der Schaltstellung III ist die elektrische Maschine 2 vollständig vom Doppelkupplungsgetriebe 5 abgekoppelt.

Der Antriebsstrang der Fig. 3 ist grundsätzlich wie oben beschrieben betreibbar, als wie die Antriebsstränge der Fig. 1 und 2, wobei dann das Schaltelement 16 die Schaltstellung II einnimmt.

Abweichend hiervon wird jedoch für den Antriebsstrang der Fig. 3 die Schaltstellung I des Schaltelements 16 vorzugsweise dann gewählt, wenn der Antriebsstrang rein elektrisch betrieben werden soll oder wenn der Verbrennungsmotor 1 aus rein elektrischer Fahrt heraus gestartet werden soll. Die Schaltstellung II für das Schaltelement 16 wird vorzugsweise dann gewählt, wenn der Antriebsstrang bei geschlossener Trennkupplung 14 hybridisch betrieben werden soll, also unter Ausnutzung der elektrischen Maschine 2 sowie des Verbrennungsmotors 1. Die Schaltstellung III für das Schaltelement 16 wird vorzugsweise dann gewählt, wenn der Antriebsstrang rein verbrennungsmotorisch über den Verbrennungsmotor 1 betrieben werden soll, um so bei rein verbrennungsmotorischer Fahrt Nulllastverluste der elektrischen Maschine 2 zu vermeiden.

Die Schaltstellung III des Schaltelements 16 kann auch dann gewählt werden, wenn zum Beispiel bei einem Fehler der elektrischen Maschine 2, so zum Beispiel einem Fehler des elektrischen Hochvoltsystems der elektrischen Maschine 2, die elektrische Maschine 2 nicht mit drehen soll.

Dann, wenn das Schaltelement 16 des Antriebsstrangs der Fig. 3 die Schaltstellung II einnimmt, kann der Antriebsstrang der Fig. 3, wie im Zusammenhang mit dem Antriebsstrang der Fig. 1 beschrieben, betrieben werden. Dann, wenn der das Schaltelement 16 des Antriebsstrangs der Fig. 3 die Schaltstellung I einnimmt, können bei rein elektrischer Fahrt ohne Einschränkungen alle Lastschaltungen ausgeführt werden. Daher wird beim Antriebsstrang der Fig. 3 die Schaltstellung I vorzugsweise dann gewählt, wenn der Antriebsstrang rein elektrisch betrieben werden soll oder wenn der Verbrennungsmotor 1 aus rein elektrischer Fahrt heraus gestartet werden soll.

Der Wechsel von der Schaltposition II in die Schaltposition I erfolgt beim Antriebsstrang der Fig. 3 insbesondere dann, wenn die elektrische Maschine 2 die benötigte Zugkraft alleine bereitstellen kann. Wird hingegen für eine hybridische Fahrt die Zugkraft des Verbrennungsmotors 1 benötigt, so wird von der Schaltposition I in die Schaltposition II gewechselt.

### Bezugszeichen

- 1: Verbrennungsmotor
- 2: elektrische Maschine
- 3: Antriebsaggregat
- 4: Abtrieb
- 5: Doppelkupplungsgetriebe
- 6: Teilgetriebe
- 7: Teilgetriebe
- 8: Doppelkupplung
- 9: Lastschaltkupplung
- 10: Lastschaltkupplung
- 11: Getriebewelle
- 12: Getriebewelle
- 13: Schaltelement
- 14: Trennkupplung
- 15: Übersetzungsstufe
- 16: Schaltelement
- 17: Welle

## Patentansprüche

1. Antriebsstrang eines Hybridfahrzeugs, mit einem einen Verbrennungsmotor (1) und eine elektrische Maschine (2) umfassenden Antriebsaggregat (3) und mit einem zwischen das Antriebsaggregat (3) und einen Abtrieb (4) geschalteten Doppelkupplungsgetriebe (5), wobei Teilgetriebe (6, 7) des Doppelkupplungsgetriebes (5) jeweils über jeweils eine Lastschaltkupplung (9, 10) einer Doppelkupplung (8) an den Verbrennungsmotor (1) ankoppelbar sind, und wobei die elektrische Maschine (2) einem Teilgetriebe (7) des Doppelkupplungsgetriebes (5) derart zugeordnet ist, dass dieselbe zwischen diesem Teilgetriebe (7) und der demselben zugeordneten Lastschaltkupplung (10) der Doppelkupplung (8) an eine Getriebewelle (12) dieses Teilgetriebes (7) angekoppelt oder ankoppelbar ist, **dadurch gekennzeichnet, dass** zwischen den Verbrennungsmotor (1) und die beiden parallel geschalteten Lastschaltkupplungen (9, 10) der Doppelkupplung (8) eine Trennkupplung (14) geschaltet ist, die jeweils in Reihe zu den beiden parallel geschalteten Lastschaltkupplungen (9, 10) der parallel geschalteten Teilgetriebe (6, 7) geschaltet ist.

2. Antriebsstrang nach Anspruch 1, **dadurch gekennzeichnet, dass** die elektrische Maschine (2) unmittelbar an der Getriebewelle (12) desjenigen Teilgetriebes (7) angreift, dem die elektrische Maschine (2) zugeordnet ist.

3. Antriebsstrang nach Anspruch 1, **dadurch gekennzeichnet, dass** die elektrische Maschine (2) mittelbar über eine zwischengeschaltete Übersetzungsstufe (15) an der Getriebewelle (12) desjenigen Teilgetriebes (7) angreift, dem die elektrische Maschine (2) zugeordnet ist.

4. Antriebsstrang nach Anspruch 1, **dadurch gekennzeichnet, dass** die elektrische Maschine (2) mittelbar über ein zwischengeschaltetes Schaltelement (16) an der Getriebewelle (12) desjenigen Teilgetriebes (7), dem die elektrische Maschine (2) zugeordnet ist, ankoppelbar ist.

5. Antriebsstrang nach Anspruch 4, **dadurch gekennzeichnet, dass** in einer ersten Schaltstellung des Schaltelements (16) die elektrische Maschine (2) an der Getriebewelle (12) des Teilgetriebes (7) dem die elektrische Maschine (2) zugeordnet ist, angreift, dass in einer zweiten Schaltstellung des Schaltelements (16) die elektrische Maschine (2) an einer Welle (17) zwischen der Trennkupplung (14) und den beiden parallel geschalteten Lastschaltkupplungen (9, 10) angreift, und dass in einer dritten Schaltstellung des Schaltelements (16) die elektrische Maschine (2) vollständig abgekoppelt ist.

6. Verfahren zum Betreiben eines Antriebsstrangs nach einem der Ansprüche 1 bis 5, **dadurch gekennzeichnet, dass** bei rein elektrischer Fahrt über ein erstes Teilgetriebe (7), dem die elektrische Maschine (2) zugeordnet ist, bei geöffneten Lastschaltkupplungen (9, 10) und geöffneter Trennkupplung (14) eine Zughochschaltung oder eine Schubrückschaltung derart ausgeführt wird, dass zur Schaltungsvorbereitung eine der beiden parallel geschalteten Lastschaltkupplungen (9, 10) der Doppelkupplung (8) zur Schaltungsausführung ausgewählt, in dem anderen, zweiten Teilgetriebe (6), dem die elektrische Maschine (2) nicht zugeordnet ist, ein Zielgang der auszuführenden Schaltung eingelegt und die nicht zur Schaltungsausführung ausgewählte Lastschaltkupplung (10, 9) geschlossen wird, und dass nachfolgend zur Schaltungsausführung die ausgewählte Lastschaltkupplung (9, 10) soweit geschlossen wird, dass das erste Teilgetriebe (7) lastfrei wird, wobei bei lastfreiem ersten Teilgetriebe (7) der Istgang der auszuführenden Zughochschaltung oder Schubrückschaltung im ersten Teilgetriebe (7) ausgelegt, nachfolgend die elektrische Maschine (2) und die ausgewählte Lastschaltkupplung (9, 10) synchronisiert und darauffolgend diese Lastschaltkupplung geschlossen wird.

7. Verfahren nach Anspruch 6, **dadurch gekennzeichnet, dass** zur Synchronisierung der elektrischen Maschine (2) und der ausgewählten Lastschaltkupplung (9, 10) die Drehzahl der elektrischen Maschine (2) angepasst wird.

8. Verfahren nach Anspruch 6 oder 7, **dadurch gekennzeichnet, dass** zur Bereitstellung eines lastfreien ersten Teilgetriebes (7) die ausgewählte Lastschaltkupplung (9, 10) soweit geschlossen wird, bis die Übertragungsfähigkeit derselben dem von der elektrischen Maschine (2) bereitgestellten Moment entspricht.

9. Verfahren zum Betreiben eines Antriebsstrangs nach einem der Ansprüche 1 bis 5, **dadurch gekennzeichnet, dass** bei rein elektrischer Fahrt über ein erstes Teilgetriebe (6), dem die elektrische Maschine (2) nicht zugeordnet ist, bei geschlossenen Lastschaltkupplungen (9, 10) der Doppelkupplung (8) und geöffneter Trennkupplung (14) eine Schubhochschaltung oder eine Zugrückschaltung derart ausgeführt wird, dass zur Schaltungsvorbereitung eine der beiden parallel geschalteten Lastschaltkupplungen (9, 10) der Doppelkupplung (8) zur Schaltungsausführung ausgewählt und für das andere, zweite Teilgetriebe (7), dem die elektrische Maschine (2) zugeordnet ist, ein Zielgang der auszuführenden Schubhochschaltung oder Zugrückschaltung ausgewählt wird, und dass nachfolgend zur Schaltungsausführung die ausgewählte Lastschaltkupplung (9, 10) soweit geöffnet wird, dass an derselben ein Schlupf auftritt, wobei bei schlupfender Lastschaltkupplung (9, 10) der Zielgang der auszuführenden Schubhochschaltung oder Zugrückschaltung im zweiten Teilgetriebe (7) eingelegt, nachfolgend die ausgewählte Lastschaltkupplung (9, 10) weiter geöffnet und darauffolgend der Istgang der auszuführenden Schubhochschaltung oder Zugrückschaltung im ersten Teilgetriebe (6) ausgelegt wird.

10. Verfahren nach Anspruch 9, **dadurch gekennzeichnet, dass** der Zielgang der auszuführenden Schubhochschaltung oder Zugrückschaltung im zweiten Teilgetriebe (7) bei schlupfender Lastschaltkupplung (9, 10) dann eingelegt wird, wenn an der Lastschaltkupplung (9, 10) bezüglich des einzulegenden Zielgangs die Synchronisierung erkannt wird.

11. Verfahren nach Anspruch 9 oder 10, **dadurch gekennzeichnet, dass** nach dem Auslegen des Istgangs der auszuführenden Schubhochschaltung oder der auszuführenden Zugrückschaltung im ersten Teilgetriebe (6) die andere, nicht zur Schaltungsausführung ausgewählte Lastschaltkupplung (10, 9) geöffnet wird.

12. Verfahren zum Betreiben eines Antriebsstrangs nach einem der Ansprüche 1 bis 5, **dadurch gekennzeichnet, dass** bei rein elektrischer Fahrt über ein erstes Teilgetriebe (7), dem die elektrische Maschine (2) zugeordnet ist, bei geöffneten Lastschaltkupplungen (9, 10) und geöffneter Trennkupplung (14), nämlich bei Ausführung einer Schaltung, der Verbrennungsmotor (1) über die elektrische Maschine (2) derart zugestartet wird, dass die dem anderen, zweiten Teilgetriebe (6) zugeordnete Lastschaltkupplung (9) der Doppelkupplung (8) zur Schaltungsausführung ausgewählt, in dem anderen, zweiten Teilgetriebe (6), dem die elektrische Maschine (2) nicht zugeordnet ist, ein Zielgang der auszuführenden Schaltung eingelegt und die nicht zur Schaltungsausführung ausgewählte Lastschaltkupplung (10) geschlossen wird, und dass nachfolgend die zur Schaltungsausführung ausgewählte Lastschaltkupplung (9) soweit geschlossen wird, dass das erste Teilgetriebe (7) lastfrei wird, wobei bei lastfreiem ersten Teilgetriebe (7) der Istgang der auszuführenden Schaltung im ersten Teilgetriebe (7) ausgelegt und nachfolgend der Verbrennungsmotor (1) über die elektrische Maschine (2) durch zumindest teilweises Schließen der Trennkupplung (14) angeschleppt wird.

13. Verfahren nach Anspruch 12, **dadurch gekennzeichnet, dass** beim Anschleppen des Verbrennungsmotors (1) durch zumindest teilweises Schließen der Trennkupplung (14) die Drehzahl der elektrischen Maschine (2) derart angepasst wird, dass die zur Schaltungsausführung ausgewählte Lastschaltkupplung (9) synchronisiert wird.

14. Verfahren nach Anspruch 12 oder 13, **dadurch gekennzeichnet, dass** dann, wenn der anzuschleppende Verbrennungsmotor (1) sein Anschleppmoment überwunden hat und aus eigener Kraft seine Drehzahl erhöhen kann, die Trennkupplung (14) wieder geöffnet wird.

15. Verfahren zum Betreiben eines Antriebsstrangs nach Anspruch 5, **dadurch gekennzeichnet, dass** die erste Schaltstellung des Schaltelements (16) dann gewählt wird, wenn bei geschlossener Trennkupplung (14) hybridisch gefahren wird, dass die zweite Schaltstellung des Schaltelements (16) dann gewählt wird, wenn rein elektrisch gefahren wird und/oder wenn aus rein elektrischer Fahrt heraus der Verbrennungsmotor (1) gestartet wird, und dass die dritte Schaltstellung des Schaltelements (16) dann gewählt wird, wenn rein verbrennungsmotorisch gefahren wird.
